(19) Europäisches Patentamt

European Patent Office

Office européen des brevets

(11) **EP 1 142 624 B1**

(12) **EUROPEAN PATENT SPECIFICATION**

(45) Date of publication and mention
of the grant of the patent:
**12.11.2003 Bulletin 2003/46**

(51) Int Cl.⁷: **B01D 53/46**, B01D 53/50

(21) Application number: **01111675.3**

(22) Date of filing: **15.03.1996**

(54) **Combustion exhaust gas treatment apparatus and method**

Vorrichtung und Verfahren zur Behandlung von Abgasen aus Verbrennungsanlagen

Dispositif et procédé pour le traitement des gaz de combustion

(84) Designated Contracting States:
**DE DK ES GB IT**

(30) Priority: **07.04.1995 JP 8246095**
**30.03.1995 JP 7277895**
**30.03.1995 JP 7277995**

(43) Date of publication of application:
**10.10.2001 Bulletin 2001/41**

(62) Document number(s) of the earlier application(s) in
accordance with Art. 76 EPC:
**96104165.4 / 0 734 754**

(73) Proprietor: **MITSUBISHI JUKOGYO KABUSHIKI
KAISHA**
**Tokyo (JP)**

(72) Inventors:
• **Shimizu, Taku**
**Chiyoda-ku, Tokyo (JP)**
• **Kimura, Kazuaki**
**Chiyoda-ku, Tokyo (JP)**
• **Okazoe, Kiyoshi**
**Chiyoda-ku, Tokyo (JP)**
• **Tatani, Atsushi**
**Chiyoda-ku, Tokyo (JP)**
• **Ukawa, Naohiko,**
**Nishi-ku Hiroshima-shi, Hiroshima-ken (JP)**
• **Hino, Masao,**
**Nishi-ku Hiroshima-shi, Hiroshima-ken (JP)**
• **Okino, Susumu**
**Nishi-ku Hiroshima-shi, Hiroshima-ken (JP)**
• **Haruki, Takashi,**
**Nishi-ku Hiroshima-shi, Hiroshima-ken (JP)**
• **Takashina, Toru,**
**Nishi-ku Hiroshima-shi, Hiroshima-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

(56) References cited:
**EP-A- 0 285 023**     **GB-A- 1 382 232**
**US-A- 5 192 514**

**Description**

FIELD OF THE INVENTION AND RELATED ARTS

The present invention relates to a combustion exhaust gas treatment apparatus and more particularly to a combustion exhaust gas treatment apparatus capable of easily removing selenium (Se) from combustion exhaust gas containing dust and Se components, and making harmless the Se components.

Hitherto, a combustion exhaust gas treatment apparatus installed in a thermal power plant or the like, comprises a dust collector (usually an electrostatic precipitator) for removing fly ash and other dust from the combustion exhaust gas, and combustion exhaust gas desulfurization apparatus for absorbing sulfurous acid in the combustion exhaust gas is generally employed.

Moreover, conventionally, as the combustion exhaust gas treatment apparatus installed in a thermal power plant or the like, a combustion exhaust gas treatment apparatus is generally employed which comprises a dry dust collector (usually an electrostatic precipitator) for removing fly ash and other dust from the combustion exhaust gas, and a wet combustion exhaust gas desulfurization apparatus for absorbing sulfurous gas in the combustion exhaust gas by contacting it with an absorbent slurry (for example, slurry containing calcium compound) in an absorption column and separating and recovering gypsum as byproduct from the slurry in the absorption column.

Recently, handling of harmful impurities contained in the combustion exhaust gas aside from sulfur oxides is posing a problem. In particular, in the combustion exhaust gas treatment apparatus for coal fired boilers, the harmfulness of selenium (Se) contained at a maximum level of about 10 mg/kg in coal is a problem lately, and its harmless treatment is demanded.

Meanwhile, Se exists as tetravalent Se (main form: selenious acid $SeO_3^{2-}$) which is easy to treat by making it insoluble by a treating agent, and hexavalent Se (main form: selenic acid $SeO_4^{2-}$) which is hard to treat by making it insoluble, and in particular the hexavalent Se is high in solubility (solubility at 20°C is 95 %) and is easy to elute. Besides, this Se has a toxicity similar to that of arsenic compound, and disaster cases and emission regulations are known overseas, and it is newly added to the list of regulated items also in Japan, and is controlled by the environmental standard (0.01 mg/liter), discharge standard (0.1 mg/liter), and elution standard in landfill (0.3 mg/liter).

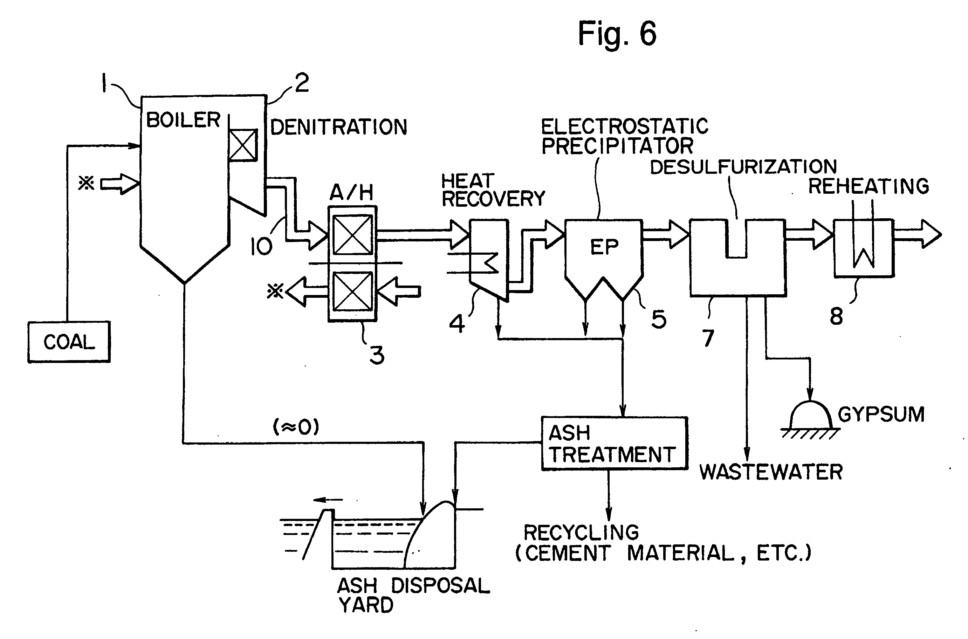

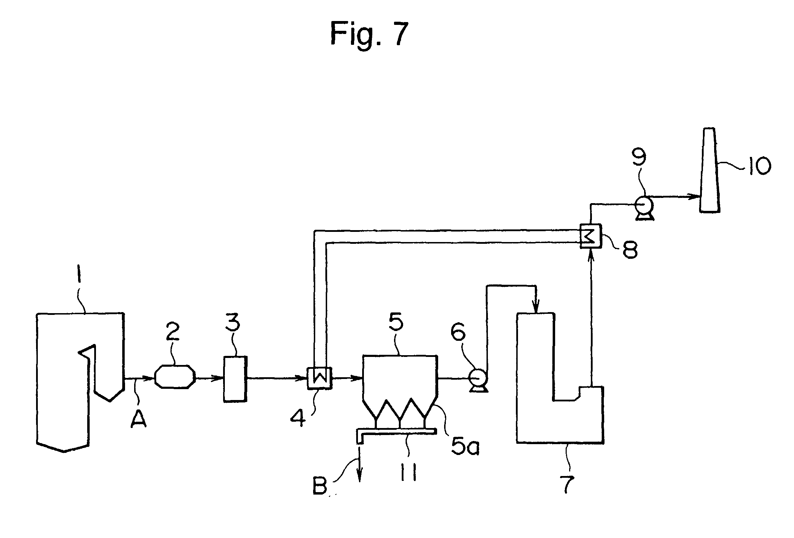

Fig. 6 shows an example of prior art of combustion exhaust gas treatment apparatus of this type (an example of combustion exhaust gas treatment apparatus for coal fired boiler). In Fig. 6 and Fig. 7, the combustion exhaust gas A emitted from a coal fired boiler 1 is sent into a denitration apparatus 2 installed downstream of the boiler 1 to be rid of nitrogen oxides (NOx), and passes through an air heater 3 and a heat recovery unit 4 of gas-gas heater (GGH), and is introduced into an electrostatic precipitator (EP) 5, in which fly ash and dust are removed. In succession, the combustion exhaust gas is guided into a wet combustion exhaust gas desulfurization apparatus 7 by a fan 6, and sulfurous gas is removed in this desulfurization apparatus 7, and after passing through a reheater 8 of the gas-gas heater (GGH), it is led into a stack 10 by a fan 9, and is released into the atmosphere through the stack 10 (Fig. 7).

On the other hand, fly ash and dust removed in the electrostatic precipitator 5 are discharged from plural hoppers 5a (dust recovery units) formed in the electrostatic precipitator 5, and are conveyed and collected in batch by a conveyor 11. Thus collected dust B is either recycled as cement material or the like, or discarded in an ash disposal yard (Fig. 6).

Herein, the desulfurization apparatus 7 comprises an absorption column, for example, in which combustion exhaust gas is introduced, and by contact of combustion exhaust gas with absorbent slurry (usually slurry containing calcium compound) in this absorption column, the sulfurous acid in the combustion exhaust gas is. absorbed in wet process, and usually from the slurry in the absorption column, gypsum is separated and collected as byproduct.

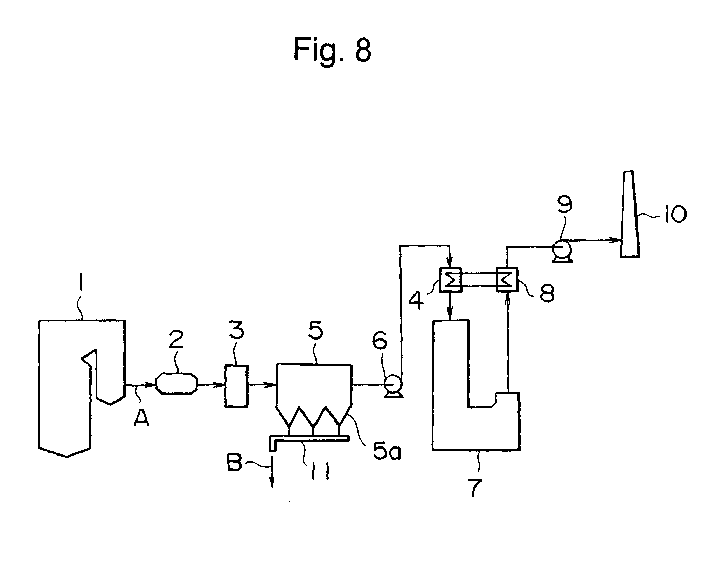

Incidentally, the heat recovery unit 4 of the gas-gas heater (GGH) may be also disposed immediately before the desulfurization apparatus 7 as shown in Fig. 8.

In these combustion exhaust gas treatment apparatus, most of Se in coal (Se in combustion exhaust gas) is condensed at the downstream side of the air heater 3 (that is, the position before introduction into the electrostatic precipitator 5), and is removed by the electrostatic precipitator 5 in a state being contained in the dust in combustion exhaust gas, and is directly mixed in the refuse in the ash disposal yard or in the cement material. To render Se harmless by conforming to the elution standard, it requires a complicated and costly aftertreatment of, for example, diluting the ash removed by the electrostatic precipitator 5 in a huge volume of water.

British Patent 1,382,232 describes a process for the recovery of selenium from waste combustion gas, particularly the waste gas from a glass melting furnace. Waste gases discharged from such furnaces contain a selenium component in the form of elemental selenium or a compound such as selenium dioxide. The selenium component is toxic and must be separated out and recovered in order to prevent atmospheric pollution. In order to achieve this separation a process is proposed which comprises a first step of contacting the waste gas having been cooled to about 250 - 300°C, with an aqueous absorption solution comprising an alkali metal sulfite and/or an alkali metal bisulfite in an absorption tower so that at least a part of the selenium component is absorbed and the humidity of the gas is increased. The process further comprises a second step of passing the waste gas treated in the first step through a glass fiber filter (demister) kept in a moist condition to collect at least some of the remaining elemental selenium and selenium compound on the filter, and in a third step acid, alpha acid H2SO4, is added to the absorption solution discharged from the first and second steps so as to reduce the selenium component dissolved in the absorption solution to elemental selenium which is precipitated from the solution and the elemental selenium so precipitated is recovered.

A method for separating mercury and selenium from roasting gases from roasting zinc concentrates is described in Erzmetall, 30(1977)12, pp 555-604. The method for separating mercury and selenium from exhaust gas includes introducing the exhaust gas from the roasting furnace for Zn-concentrate to a boiler, cooling and then separating the dust treated with an electric dust collector. For separating selenium calcium carbonate, $CaCo_3$, is added into the rinsed precipitate and then mercury is separated and subsequently water, H2SO4 and SO2 are added. Such exhaust gas from the roasting furnace is different from combustion gas, especially of a thermal power plant.

A combustion exhaust treatment apparatus for treating combustion exhaust gas containing dust and arsenic components is described in EP 0 285 023 A1. Connected from a fire furnace it comprises a denitrating reactor for denitrating the combustion exhaust gas discharged from the fire furnace, a dust collector for collecting solid particles as fly ash in the exhaust gas and a transport pipe for circulating the solids collected by the dust collector through the fire furnace. The transport pipe is provided with an arsenic removal means which can be formed by a heating device such as an electric oven in which the fly ash or dust particles are heated up to 1000°C or more to gasify the arsenic components. These are thus inhibited from concentrating in the combustion exhaust gas and therefore a catalyst in the denitrating reactor can be prevented from deteriorating whereby the efficiency of the denitration can be kept up.

OBJECTS AND SUMMARY OF THE INVENTION

In the light of the prior art, it is an object of the invention to propose a combustion exhaust gas treatment apparatus capable of more easily removing and making harmless the Se components contained in combustion exhaust gas to the extent necessary to meet generally adopted environmental standards for the purity of combustion exhaust gas, in particular of thermal power plants.

The invention achieving this object and its preferred embodiments are defined in the appended claims.

(1) A combustion exhaust gas treatment apparatus for treating combustion exhaust gas containing sulfurous acid, dust and Se components, includes a dust collector for removing dust from the combustion exhaust gas and a desulfurization apparatus for treating sulfurous acid contained in the combustion exhaust gas having an absorption column in which an absorbent slurry for absorbing and removing sulfurous acid circulates. The apparatus further comprises heating means for heating the dust removed by the dust collector up to a temperature for gasification of Se in the dust, wherein the gas generated by heating the dust by the heating means is fed into the desulfurization apparatus together with the combustion exhaust gas, and Se is dissolved and captured in the slurry in the desulfurization apparatus, and feeding means for mixing a treating agent for making the tetravalent Se insoluble into the circulating absorbent slurry..

(2) The combustion exhaust gas treatment apparatus of (1), further comprises oxidation-reduction reaction control means for controlling the oxidation-reduction reaction in the desulfurization apparatus, so that the hexavalent Se in the slurry in the desulfurization apparatus may be reduced by sulfurous acid in the slurry to be tetravalent Se.

(3) In the combustion exhaust gas treatment apparatus the desulfurization apparatus has a cooling and dust collecting column disposed upstream of the absorption column, wherein the gas generated by heating the dust by the heating means is fed into the desulfurization apparatus together with the exhaust gas, and Se is dissolved and captured in the circulation liquid in the cooling and dust collecting column, and the treating agent for making the tetravalent Se insoluble is mixed in the treating process into the circulation liquid.

(4) In the gas treatment apparatus of any one of (1) to (3) the dust collecting means comprises a plurality of recovery units for separating and collecting dust, from the inlet side to the outlet side of the combustion exhaust gas, only the dust collected from the recovery unit at the inlet side of the combustion exhaust gas and the dust collected from the outlet side are individually separated and collected, and only the dust separated and collected from the recovery unit at the outlet side is fed into the heating means.

(5) A combustion exhaust gas treatment apparatus of any one of (1) to (4), further comprising sorting means for sorting the dust separated by the dust collecting means into large particle size group and small particle size group, wherein only the small particle size dust sorted by the sorting means is introduced into the heating means.

(6) A combustion exhaust gas treatment apparatus of any one of (1) to (5), wherein the heating means is capable of heating the dust to any temperature in a range of 100 to 1200°C, especially 320 to 1000°C.

In the combustion exhaust gas treatment apparatus of (1), most of Se in combustion exhaust gas is removed by the dust collector in a state of being contained in fly ash or dust, and is heated and gasified by the heating means.

Accordingly, almost no Se is left over in the dust after treatment, and the Se elution standard is satisfied, and hence it can be directly recycled as cement material or discarded. The gasified Se is fed into the desulfurization apparatus together with the combustion exhaust gas being rid of dust, and is dissolved and captured in the absorbent slurry. In the treating process of the absorbent slurry, it is mixed with a treating agent for making tetravalent Se insoluble, and is made insoluble. That is, at least tetravalent Se is directly made insoluble by the treating agent in the desulfurization apparatus, and is discharged as being mixed in the solid matter (gypsum, etc.) separated and formed from the slurry in the desulfurization apparatus, or is made insoluble by the treating agent in the wastewater treating apparatus for treating the discharge of circulation liquid in the desulfurization apparatus, and is easily solidified.

Therefore, when the content of hexavalent Se is small in the absorption liquid in the desulfurization apparatus, only by making tetravalent Se insoluble, the Se elution standard can be satisfied without releasing Se into the atmosphere. Moreover, in the constitution where Se is separated from the dust by the heating means and is introduced into the desulfurization apparatus, without feeding the entire dust into the desulfurization apparatus, the dust can be recycled easily, and lowering of desulfurization performance in the desulfurization apparatus can be avoided.

In the combustion exhaust gas treatment apparatus of (2), the oxidation-reduction reaction control means controls the oxidation-reduction reaction of the slurry in the desulfurization apparatus so that the hexavalent Se mixed in the slurry in the desulfurization apparatus may be almost completely reduced by the sulfurous acid in the slurry to become tetravalent. Accordingly, the hexavalent Se can be changed to tetravalent almost completely in the desulfurization apparatus, and the Se in combustion exhaust gas can be easily and completely made insoluble.

In the combustion exhaust gas treatment apparatus of (3), most of Se in combustion exhaust gas is removed by the dust collector in a state of being contained in fly ash or dust, and is heated and gasified by the heating means. The gasified Se is fed into the cooling and dust collecting column of the desulfurization apparatus together with the combustion exhaust gas being rid of dust, and is dissolved and captured in the circulation liquid. In the treating process of the circulation liquid, it is mixed with a treating agent for making tetravalent Se insoluble, and is made insoluble. That is, at least tetravalent Se is directly discharged to the solid-phase side by solid-liquid separating means or the like connected to the cooling and dust collecting column of the desulfurization apparatus, or is made insoluble by the treating agent in the wastewater treating apparatus for treating the discharge of circulation liquid in the desulfurization apparatus, and is easily solidified. Besides, most hexavalent Se reacts with sulfurous acid absorbed from the combustion exhaust gas in the liquid in the cooling and dust collecting column and is reduced to be tetravalent Se, and is made insoluble by the treating agent, and is discharged to the solid-phase side by the separating means so as to be made harmless.

Therefore, in this, too, the Se elution standard can be satisfied easily without releasing Se into the atmosphere, and the cooling and dust collecting column of the desulfurization apparatus functions also as hexavalent Se reduction reaction facility, so that the constitution of the entire apparatus may be simplified. Also in this apparatus, Se or other dust rarely mixes into the slurry in the absorption column of the desulfurization apparatus, and the desulfurization performance in the desulfurization apparatus can be maintained high, and moreover gypsum of high quality can be collected as byproduct.

In the combustion exhaust gas treatment apparatus of (4), only the dust separated and collected from a specific recovery unit at the outlet side of the combustion exhaust gas in the dust collecting means is fed into the heating means, and Se is gasified and removed, and therefore the required capacity of the heating means may be reduced. Moreover, in the subsequent desulfurization apparatus and others, the required amount of the treating agent for making Se insoluble is also reduced, so that Se is made harmless more easily and inexpensively.

That is, according to the study by the present inventors, it is known that more Se is contained (deposited) in the smaller particle size dust (ash) separated and collected from the specific recovery unit at the outlet side, and the Se is made harmless on the whole only by heating dust of smaller particle size, and applying insoluble treatment on gasified Se.

In the combustion exhaust gas treatment apparatus of (5), Se is gasified and separated by feeding only the dust of small particle size sorted by the sorting means into the heating means, and therefore the required capacity of the heating means may be reduced. Moreover, in the subsequent desulfurization apparatus and others, the required amount of the treating agent for making Se insoluble is also reduced, so that Se is made harmless more easily and inexpensively.

That is, according to the study by the present inventors, it is known that more Se is contained (deposited) in the smaller particle size dust (ash), and the Se is made harmless on the whole only by heating dust of smaller particle size, and applying insoluble treatment on gasified Se.

In the combustion exhaust gas treatment apparatus of (6), the heating temperature of dust by the heating means is 100 to 1200°C, and therefore recondensation of gasified Se into dust is prevented, and Se can be easily removed from dust, and the Se elution standard of dust is satisfied.

BRIEF DESCRIPTION OF THE DRAWINGS

Fig. 1 is a schematic structural diagram of a combustion exhaust gas treatment apparatus in embodiment 1 of the invention.
Fig. 2 is a schematic structural diagram of a combustion exhaust gas treatment apparatus in embodiment 2 of the invention.
Fig. 3 is a schematic structural diagram of a combustion exhaust gas treatment apparatus in embodiment 3 of the invention.
Fig. 4 is a graph showing the relation between dust heating temperature and Se concentration in elution liquid in an elution test in embodiment 1 of the invention.
Fig. 5 is a graph showing the relation between dust heating temperature and Se concentration in elution liquid in an elution test in embodiment 1 of the invention.
Fig. 6 is a schematic structural diagram showing an example of a conventional combustion exhaust gas treatment apparatus.
Fig. 7 is a schematic structural diagram showing other example of a conventional combustion exhaust gas treatment apparatus.
Fig. 8 is a schematic structural diagram showing a different example of a conventional combustion exhaust gas treatment apparatus.

DETAILED DESCRIPTION OF THE PREFERRED EMBODIMENTS

Referring now to the drawings, embodiments of the invention are described below.

(Embodiment 1)

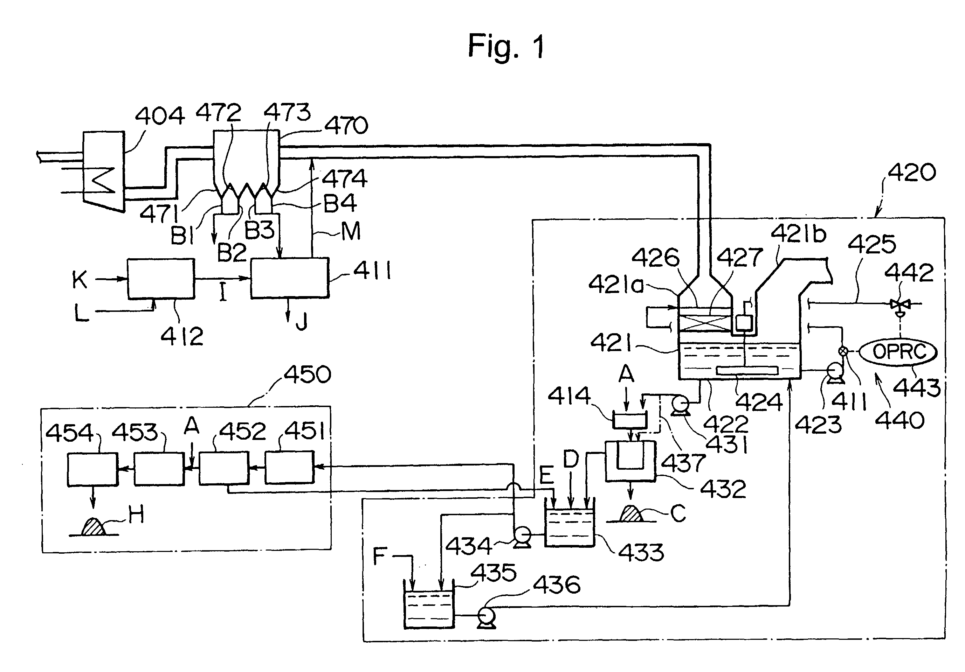

Fig. 1 is a schematic structural diagram showing a 1. example of a combustion exhaust gas treatment apparatus according to the invention.

In the combustion exhaust gas treatment apparatus of this embodiment, as shown in Fig. 1, the dust containing Se is removed by an electrostatic precipitator 470, the dust (ash) removed by the electrostatic precipitator 470 is heated by heating means 411 to sublimate and gasify the Se in the dust, and this gas is fed into a wet desulfurization apparatus 420 (hereinafter, desulfurization apparatus 420), together with the combustion exhaust gas being rid of dust, to be treated.

In the desulfurization apparatus, as shown in reaction formulas (1) and (2), tetravalent Se (main form: selenious acid $SeO_3^{2-}$) and hexavalent Se (main form: selenic acid $SeO_4^{2-}$) are present. This hexavalent Se is almost completely reduced in the desulfurization apparatus 420 by so-called ORP control (oxidation-reduction potential control) to be transformed into tetravalent Se.

$$SeO_{2(g)} + H_2O \rightarrow 2H^+ \cdot SeO_3^{2-} \tag{1}$$

$$SeO_3^{2-} + 1/2O_2 \rightarrow SeO_4^{2-} \tag{2}$$

Herein, the heating means 411 is, for example, a kiln, which is designed to heat the ash B3, B4 introduced from the electrostatic precipitator 470 until Se is sublimated and gasified by the supplied hot air I, and produced gas M is fed into the absorption column 421 of the desulfurization apparatus together with the combustion exhaust gas, while the remaining ash J is taken out to be recycled as cement material or the like. As means for feeding hot air I into the heating means 411, in this case, a heavy oil fired boiler 412 is provided, and by burning heavy oil K and heating the air L, hot air I at about, for example, 1000°C is supplied.

The treating temperature in the heating means 411 may be 100 to 1200°C, but in order to gasify the Se in the dust more perfectly and efficiently, it is preferred to set in a range of 320 to 1000°C. For instance, when the flow and temperature of the dust introduced into the heating means 411 from the electrostatic precipitator 470 are 15 t/h and 90°C, to heat to about 320°C, the flow and temperature of hot air I, and the kiln specification for composing the heating means 411 may be set, for example, as follows. That is, the flow rate of hot air I is 3100 m3 N/h, temperature of hot air I is 1000°C, the filling rate in the kiln is 8 %, the ash density in kiln is 0.5, and the residence time in the kiln is 0.5 hr.

The electrostatic precipitator 470 comprises plural hoppers 471 to 474 for separating and collecting the dust, and these hoppers 471 to 474 are formed sequentially from the inlet side (upstream side) to the outlet side (downstream side) of the combustion exhaust gas, and in this constitution, dust of larger particle size is collected from the inlet side hopper, and dust of smaller particle size is collected from the outlet side hopper. In this case, only the dust B3, B4 separated and collected from the specific hoppers 473, 474 at the outlet side are fed into the heating means 411, and the remaining dust B1, B2 are recycled as cement material or discarded directly. In this embodiment, meanwhile, the electrostatic precipitator 470 functions as the dust collecting means and sorting means of the invention.

The desulfurization apparatus 420 is of tank oxidation type in this embodiment, and comprises an absorption tank 421 in which an absorbent slurry (composed of limestone in this case) is supplied into a bottom tank 422, a circulation pump 423 for sending the absorbent slurry in the tank 422 into an upper part 421a (combustion exhaust gas lead-in part) of the absorption tank 421 to contact with combustion exhaust gas, an arm-rotary type air sparger 424 supported in the tank 422 for rotating horizontally by a motor not shown, agitating the slurry in the tank 422, and blowing the supplied air efficiently into the tank 422 as fine bubbles, and an air feed pipe 425 for feeding air into the air sparger 424, in which the absorbent slurry absorbing sulfurous acid and the air are brought into contact efficiently in the tank 422, and the whole volume is oxidized to obtain gypsum.

In this tank 422, a slurry pump 431 for sucking out the slurry in the tank 422 is connected, and the treating agent A is charged by the mixing means 414 into the slurry sucked out by this slurry pump 431, and the mixture is supplied into a solid-liquid separator 432 to be filtered, and the gypsum C in the slurry is taken out as solid cake (usually water content about 10%). On the other hand, the filtrate (mainly water) from the solid-liquid separator 432 is once sent into the filtrate tank 433, and, if necessary, makeup water D or return liquid E from the wastewater treating apparatus 450 is added, and part of the liquid is sent into the adsorbent slurry tank 435 by the pump 434, and mixed with limestone F ($CaCO_3$) supplied from limestone silo not shown, and is supplied as absorbent slurry again into the tank 422 by the slurry pump 436. The mixing means 414 is composed of, for example, a mixing tank and an agitating mechanism for agitating the liquid in the mixing tank. As the treating agent A, a chemical at least reacting with tetravalent Se (main form: selenious acid $SeO_3^{2-}$) to make it insoluble is needed, and for example, $FeCl_3$ or $Fe_2(SO_4)_3$ may be used.

The desulfurization apparatus 420 is further equipped with oxidation-reduction reaction control means 440 for controlling the oxidation-reduction reaction in the absorption column 421. The oxidation-reduction reaction control means 440 consists, in this case, of a sensor 441 provided in the discharge side piping of the circulation pump 423 for detecting the oxidation-reduction potential of the slurry in the tank 422, a flow control valve 442 provided on the way of air feed pipe 425 for adjusting the air supply flow into the air sparger 424, and a controller 443 for controlling the action of the flow control valve 442 on the basis of the detection output of the sensor 441. Herein, the sensor 441 is realized by immersing an electrode made of, for example, platinum in the slurry. The controller 443 is designed to control continuously the opening degree of the flow control valve 442, so that the air feed rate into the air sparger 424 may be a minimum required limit for oxidizing and digesting the sulfurous acid dissolved in the slurry from the combustion exhaust gas. More specifically, on the basis of the correlation of the sulfurous acid concentration and oxidation-reduction potential, the oxidation-reduction potential when the sulfurous acid concentration is nearly zero is predetermined as the reference potential, and the proportional control is effected to increase the air feed rate depending on the deviation when the oxidation-reduction potential detected by the sensor 441 is lower than this reference potential, and to decrease the air feed rate depending on the deviation when the oxidation-reduction potential detected by the sensor 441 is higher than the reference potential.

Incidentally, since the oxidation-reduction reaction control means 440 is designed to supply air of the minimum required limit for oxidizing the total volume of sulfurous acid, it eventually has a function of inducing the reaction for reducing almost whole volume of other acids contained in the slurry by the sulfurous acid.

That is, the gas M containing vaporized Se released from the heating means 411 is fed into the absorption column 421 together with combustion exhaust gas, and becomes tetravalent Se (main form: selenious acid $SeO_3^{2-}$) and hexavalent Se (main form: selenic acid $SeO_4^{2-}$), but by the control of the controller 443, the hexavalent Se reacts with the sulfurous acid absorbed from the combustion exhaust gas to become tetravalent Se (main form: selenious acid $SeO_3^{2-}$) in the reduction reaction, which takes place in the absorption column 421. This reaction is expressed in the following reaction formula (3).

$$SeO_4^{2-} + SO_3^{2-} \rightarrow SeO_3^{2-} + SO_4^{2-} \tag{3}$$

The wastewater treating apparatus 450 is a so-called wastewater-free treating apparatus, comprising a pretreatment facility 451, an electric dialysis facility 452, a secondary concentrating facility 453, and a solidifying facility 454. In this wastewater treating apparatus 450, part of the liquid in the filtrate tank 433 is supplied by the pump 434 of the desulfurization apparatus 420, and impurities in this liquid (for example, Cl) are removed mainly by the function of the electric dialysis facility 452, and the residue after removal is returned to the filtrate tank 433 or absorbent slurry tank 435 of the desulfurization apparatus 420. The removed impurities are finally solidified in the solidifying facility 454, but at least prior to the solidifying process (for example, at a prior stage of the secondary concentrating facility 453), the treating agent A for reacting with tetravalent Se (main form: selenious acid $SeO_3^{2-}$) to make it insoluble is mixed in.

In thus constituted combustion exhaust gas treatment apparatus, the combustion exhaust gas is sufficiently cooled upstream of the electrostatic precipitator 470, and Se in the combustion exhaust gas is mostly condensed and deposits on the fly ash or other dust (particularly on small particles), and therefore most Se in combustion exhaust gas is captured once by the electrostatic precipitator 470 together with the dust. In this case, of the captured dust B1 to B4, dust B1 and B2 of large particle size are small in Se content, and may be hence directly used as cement material or discarded, while only dust B3 and B4 of small particle size are heated in the heating means 411, and the Se in the dust B3, B4 is gasified, and fed into the absorption column 421 of the desulfurization apparatus 420 together with the combustion exhaust gas released from the electrostatic precipitator 470.

The combustion exhaust gas introduced into the absorption column 421 (including the gas sent from the heating means 411 and others) contacts with the absorbent slurry sprayed from a spray valve 426 by the circulation pump 423, and the sulfurous acid and gasified Se are absorbed and removed, and is discharged from the combustion exhaust gas lead-out part 421b as treated combustion exhaust gas.

The sulfurous acid sprayed from the spray valve 426 and absorbed in the absorbent slurry flowing down through a filler 427 is agitated by the air sparger 424 in the tank 422 and contacts with multiple bubbles blown in to be oxidized, and further undergoes neutralization reaction to become gypsum. In the absorption column 421, by the reaction of the reaction formula (3), nearly whole volume of hexavalent Se (main form: selenic acid $SeO_4^{2-}$) is transformed into tetravalent Se (main form: selenious acid $SeO_3^{2-}$). Principal reactions (except for reaction formula (3) taking place in this process are expressed in the following reaction formulas (4) to (6).

(Absorption column combustion exhaust gas lead-in part)

$$SO_2 + H_2O \rightarrow H^+ + HSO_3^- \tag{4}$$

(Tank)

$$H^+ + HSO_3^- + 1/2O_2 \rightarrow 2H+ + SO_4^{2-} \tag{5}$$

$$2H^+ + SO_4^{2-} + CaCO_3 + H_2O \rightarrow CaSO_4 \cdot 2H_2O + CO_2 \tag{6}$$

Thus, in the tank 422, gypsum ($CaSO4 \cdot 2H_2O$), a small amount of limestone ($CaCO_3$) as absorbent, and mainly tetravalent Se (main form: selenious acid $SeO_3^{2-}$ ) are suspended, and they are sucked out by the slurry pump 431, and the treating agent A is mixed by the mixing means 414, and the mixture is supplied into the solid-liquid separator 432 to be filtered, and gypsum C is obtained as cake form of low water content (usually water content about 100).

Most of tetravalent Se (main form: selenious acid $SeO_3^{2-}$) undergoes the reaction expressed in reaction formulas (7), (8), or (9), (10), and is made insoluble in a form of iron selenite ($Fe_2(SeO_3)_3$), and is mixed in the separated gypsum c.

$$FeCl_3 \rightarrow Fe^{3+} + 3Cl^- \tag{7}$$

$$2Fe^{3+} + 3SeO_3^{2-} \rightarrow Fe_2(SeO_3)_3 \downarrow \tag{8}$$

or

$$Fe_2(SO_4)_3 \rightarrow 2Fe^{3+} + 3SO_4^{2-} \tag{9}$$

$$2Fe^{3+} + 3SeO_3^{2-} \rightarrow Fe_2(SeO_3)_3 \downarrow \tag{10}$$

If, however, it is not desired that iron selenite ($Fe_2(SeO_3)_3$) is mixed in the separated and collected gypsum C, the slurry from the slurry pump 431 is supplied directly into the solid-liquid separator 432 through a line 437 (shown in Fig. 1), and gypsum C of high purity is recovered. In this case, Se is treated to be insoluble in the wastewater treating apparatus 450 shown below.

The function of the wastewater treating apparatus 450 in the combustion exhaust gas treatment apparatus is described below.

As mentioned above, the vaporized Se is absorbed in the slurry in the desulfurization apparatus 420 together with the sulfurous acid in the combustion exhaust gas, and the hexavalent Se thereof reacts (reaction formula (3) in the absorption column 421 and is almost completely transformed into tetravalent Se. This tetravalent Se is treated same as other impurities (e.g. Cl) in the wastewater treating apparatus 450, and this Se and other impurities are removed so as not to be accumulated excessively in the slurry solution circulating in the desulfurization apparatus 420.

That is, in the wastewater treating apparatus 450, part of the filtrate of the filtrate tank 433 in the desulfurization apparatus 420 is extracted from the discharge side of the pump 434, and the impurities in this solution (Cl, etc.) are removed mainly by the function of the electric dialysis facility 452, and returned to the filtrate tank 433 of the desulfurization apparatus 420. The liquid leaving the electric dialysis facility 452 is mixed with the treating agent, and the mixture is concentrated in the secondary concentration apparatus 453, solidified by the solidifying facility 454, and discarded in the ash disposal yard or the like as impurity chip H. At this time, the tetravalent Se in the impurities reacts with the treating agent A in the formulas (7), (8), or (9), (10), and is transformed into iron selenite ($Fe_2(SeO_3)_3$), and is present in an insoluble form in the impurity chip H.

As described herein, according to the combustion exhaust gas treatment apparatus of the embodiment, in addition to the conventional purification of combustion exhaust gas (removal of dust, removal of sulfurous acid), Se in the combustion exhaust gas is removed along with dust, and finally it is contained, in an insoluble form, in the dust cake G or impurity chip H, so as not to be eluted when recycled or discarded. Moreover, hexavalent Se which is hard to be treated (made insoluble) is transformed into tetravalent Se which is easy to discard, by the treating agent by the oxidation-reduction reaction control means 440 in the absorption column 421 of the desulfurization apparatus 420, and therefore, as compared with the apparatus comprising an independent reaction column for transforming, hexavalent Se into tetravalent Se, for example, Se in combustion exhaust gas may be removed and made harmless easily and inexpensively.

What is more, according to the combustion exhaust gas treatment apparatus, by the function of the oxidation-reduction reaction control means 440, nearly whole volume of hexavalent Se is eventually transformed into tetravalent Se in the absorption column 421, and is finally made insoluble and discarded, and therefore the concentration of Se (not made insoluble) remaining in the gypsum cake C or impurity chip H is trifling, and the elution standard may be satisfied with an ample margin.

In this case, moreover, by applying Se insoluble treatment only on the dust B3, B4 separated and collected from the specific hoppers 473, 474 at the outlet side of the combustion exhaust gas in the electrostatic precipitator 470, the required amount of the treating agent A and the required capacity of the heating means 411 may be reduced, so that the Se may be made harmless more easily and inexpensively.

That is, according to the study by the present inventors, it is known that more Se is contained (deposited) in the smaller particle size dust (ash) separated and collected from the specific recovery unit at the outlet side, and the Se is made harmless on the whole only by applying insoluble treatment on the dust of smaller particle size, thereby contributing to reduction of facility cost and running cost.

Below are explained the results of dusts heating experiment, dust capturing test, and elution experiment, in the same apparatus as in the above embodiment.

The heating experiment was conducted by heating the dust containing 84 mg/kg of Se at various temperatures (200 to 1200°C) for various durations (5 to 30 minutes). Before and after heating experiment, the Se elution test of dust was conducted in a method conforming to ordinance No. 13 of the Environmental Agency of Japan, and the Se concentration in the elution solution was analyzed by the atomic absorption photometry by the hydrogen compound generating method.

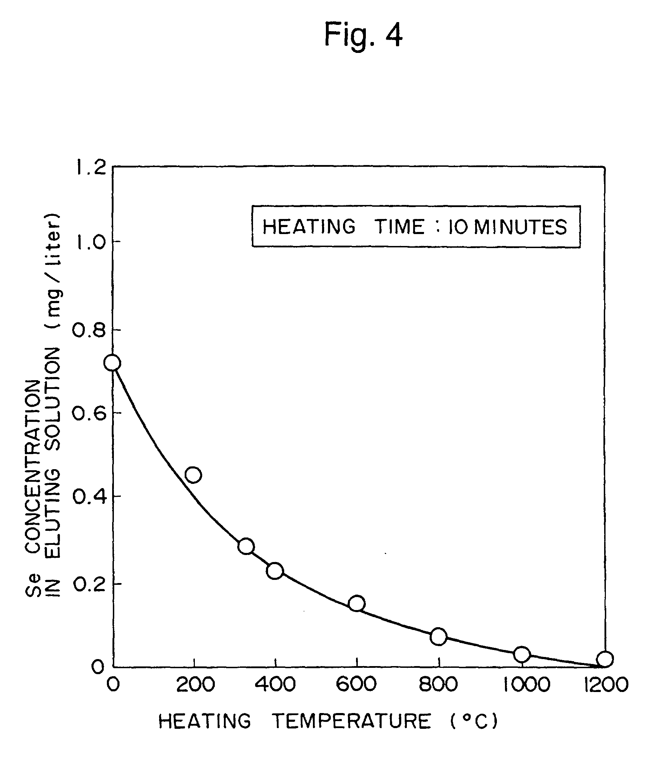

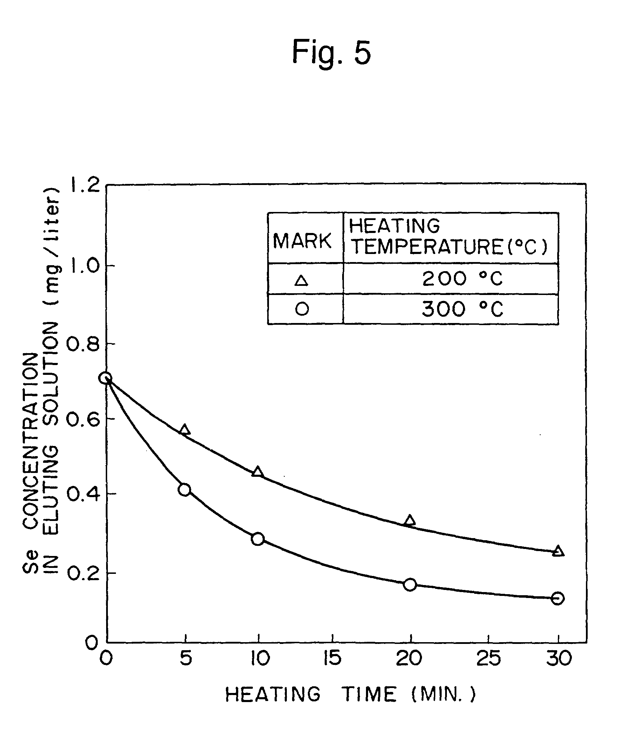

The results by heating temperature are shown in Fig. 4, and effects of h eating time are given in Fig. 5. When heated for 10 to 30 minutes at temperature of 320°C or more, the Se elution in the dust was less than the elution standard of 0.3 mg/liter concerning the landfill regulation, and it is known that Se is mostly gasified. At temperature of 200°C, by extending the heating time to 30 minutes, the Se elution from the dust was below the elution standard concerning landfill.

Therefore, when gasifying the Se in dust by heating, as the temperature not allowing the gasified Se to condense again, by heating the dust temperature to 100 to 1200°C, preferably 320 to 1000°C, the Se in the dust can be removed. That is, in this embodiment, the dust J after being heated by the heating means 411 is proved to be recycled or discarded directly.

In the dust capturing and elution test, coal containing 3 mg/kg of Se was supplied into a combustion furnace at a rate of 25 kg/h, and the combustion exhaust gas exhausted at 200 m$^3$ N/h from the combustion furnace was cooled to 150°C, and fed into the electrostatic precipitator. In this case, more than 99 % of the dust was captured by the electrostatic precipitator, and the total volume collected from all hoppers was 3.4 kg/h. Discharge, mean particle size, and eluting Se concentration in the dust B1, B2 (collected ash) collected from the upstream hoppers 471, 472, and dust B3, B4 collected from downstream hoppers 473, 474 were measured, of which results are shown in Table 1.

## Table 1

| | Collected ash | |
|---|---|---|
| Item | Collected ash discharged from hoppers 471, 472(combustion exhaust gas inlet side) | Collected ash discharged from hoppers 473, 474 (combustion exhaust gas outlet side) |
| Discharge amount (kg/h) | 2.27 | 1.14 |
| Mean particle size of collected ash (μm) | 12 | 5 |
| Eluting selenium concentration in collected ash (mg/liter) | .20 | 0.49 |

More specifically, the discharge amount of the dust B3, B4 separated and collected from the hoppers 473, 474 at the outlet side of the combustion exhaust gas was slight, 1.14 kg/h, but the eluting Se concentration was 0.49 mg/liter, high above the standard. On the other hand, the discharge amount of the dust B1, B2 separated and collected from the hoppers 471, 472 at the inlet side of combustion exhaust gas was large, 2.27 kg/h, but the eluting Se concentration was 0.20 mg/liter, far below the standard. Accordingly, it is known that the dust B1, B2 separated and collected from the hoppers 471, 472 at the inlet side of the combustion exhaust gas can be directly discarded. That is, Se insoluble treatment is not needed in the dust at the inlet side of the combustion exhaust gas which is about twice larger in the discharge amount, and hence it is evident that the required amount of the treating agent A and the required capacity of the heating means 411 can be substantially saved.

Incidentally, such difference in eluting Se concentration is regarded to be due to the particle size of dust (ash). That is, when gaseous Se ($SeO_2$) is condensed and deposits on the surface of the ash forming the dust, ash of smaller particle size is greater in the specific surface area per unit weight, and hence more Se deposits. On the other hand, in the dust collector such as the electrostatic precipitator mentioned above, coarse ash particles are likely to be captured at the inlet side of the combustion exhaust gas, and fine ash particles are likely to be captured at the outlet side of the combustion exhaust gas, and in other words there is a sorting function, and it is hence considered that the eluting Se concentration is high in the dust captured at the outlet side of the combustion exhaust gas.

In this embodiment, due to the effect of Se mixing into the absorption column, it may be difficult to realize a high quality (purity) of gypsum C, and if this is a problem, as mentioned above, Se insoluble treatment may be done only in the wastewater treating apparatus 450.

Incidentally, the treating agent A may be mixed in other position than the position shown in Fig. 1 as far as within the slurry apparatus of the desulfurization apparatus 420, or may be directly charged into the absorption column 421. Or the treating agent A may be mixed only in the wastewater treating apparatus 450 of the desulfurization apparatus 420, and hence the mixing means 414 in Fig. 1 may be omitted. In this case, in the desulfurization apparatus 420, all Se (especially tetravalent Se) circulates as being dissolved in the slurry solution, and part of the Se is sequentially led into the wastewater treating apparatus 450 to be made insoluble, and hence does not mix into the gypsum C, so that it is beneficial when desired to keep a high purity of gypsum.

Moreover, if it is not necessary to reduce the charging amount of the treating agent A or required capacity of the heating means 411, all of the dust B1 to B4 collected in the electrostatic precipitator 470 may be fed into the heating means 411 and treated.

(Embodiment 2)

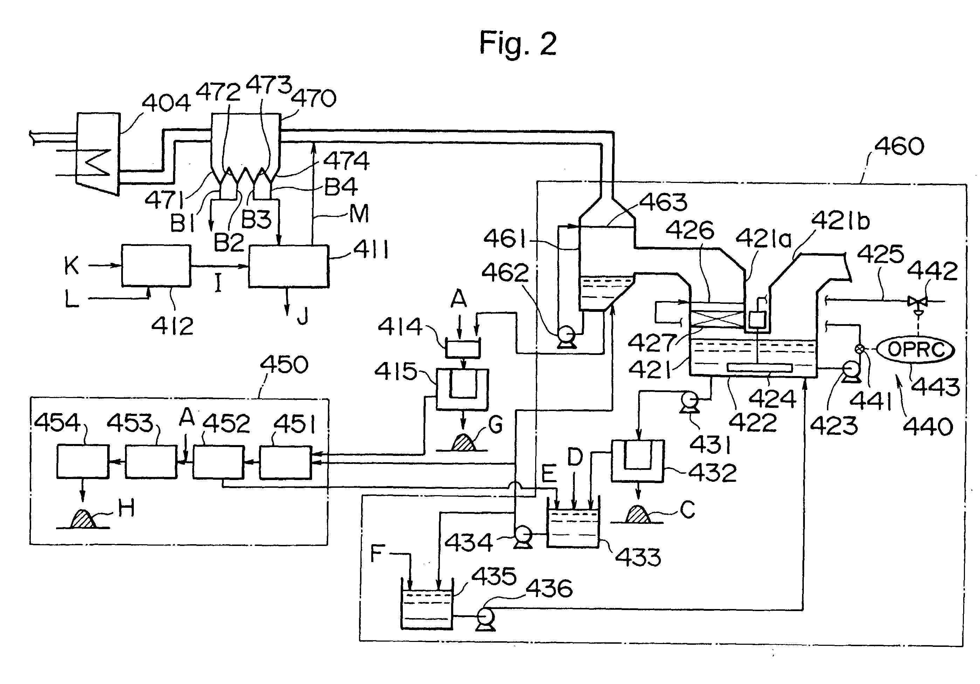

Fig. 2 is a schematic structural diagram showing a 2. example of a combustion exhaust gas treatment apparatus of the invention. Same constituent elements as in embodiment 1 are identified with same reference numerals, and their explanations are omitted.

In the combustion exhaust gas treatment apparatus of the embodiment, as shown in Fig. 2, a desulfurization apparatus 460 having a cooling and dust collecting column 461 for cooling the dust and removing dust is disposed at the upstream side of the absorption column 421, and the gas including Se generated in heating means 411, together with combustion exhaust gas, is fed into the cooling and dust collecting column 461 of the desulfurization apparatus 460, while the treating agent A is charged into the slurry extracted from the cooling and dust removing column 461 by the mixing means 414. and it is separated into solid and liquid by the separating means 415.

Herein, in the cooling and dust collecting column 461, the liquid from the filtrate tank 433 is supplied from the pump 434, and this liquid is sprayed from an upper header pipe 463 by a circulation pump 462. Between the cooling and dust collecting column 461 and absorption column 421, a mist eliminator, not show, is provided.

In this case, the Se separated from the dust by heating once gets into the cooling and dust removing column 461, and the reaction in (reaction formula (3)) occurs in the cooling and dust collecting column 461, and hexavalent Se is almost totally transformed into tetravalent Se, and this tetravalent Se is made insoluble by the treating agent A, and is mixed into the dust cake G or impurity chip H in the wastewater treating apparatus 450. Herein, different from embodiment 1, fine dust not captured by the electrostatic precipitator does not mix into the absorption column 421, and therefore a high desulfurization rate may be kept and gypsum C of high quality may be easily obtained.

In Fig. 2, meanwhile, the separated water of the separating means 415 is directly fed into the wastewater treating apparatus 450, but for further perfect transformation reaction from hexavalent Se into tetravalent Se, the separated water may be fed, for example, into the absorbent slurry tank 435 and then guided into the absorption column 421.

The treating agent A may be also charged directly into the cooling and dust collecting column 461, or same as in embodiment 1, the treating agent A may be charged only into the wastewater treating apparatus 450, and the mixing means 414 and separating means 415 may be omitted.

(Embodiment 3)

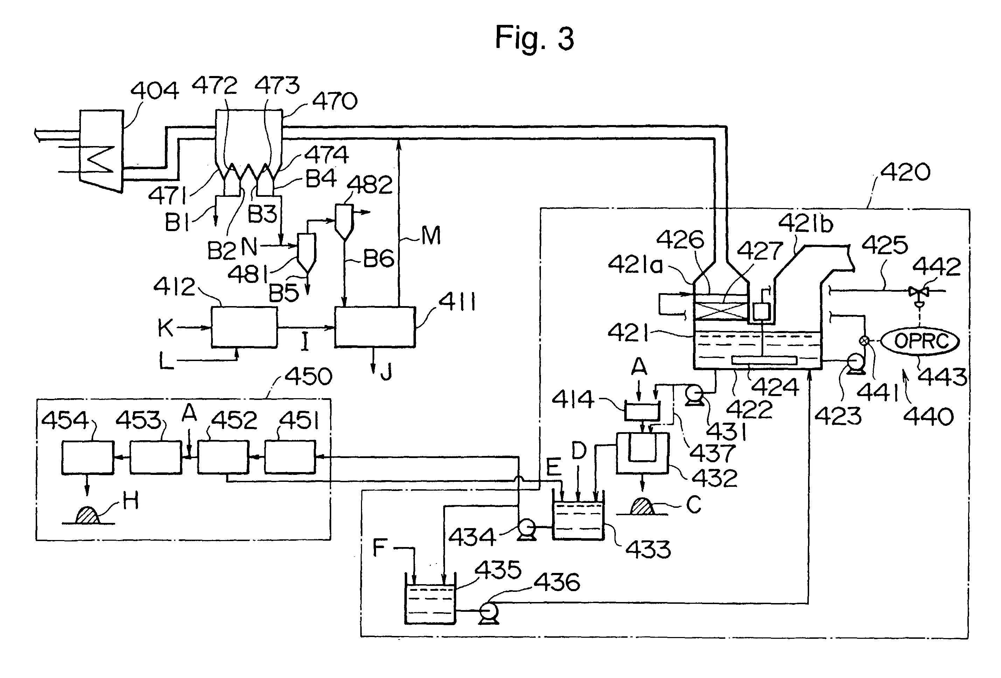

Fig. 3 is a schematic structural diagram showing a 3. example of a combustion exhaust gas treatment apparatus of the invention. Same constituent elements as in embodiment 1 are identified with same reference numerals and their explanations are omitted.

This combustion exhaust gas treatment apparatus, as shown in Fig. 3, comprises a sorter 481 (sorting means) for classifying the dust B1 to B4 captured by the electrostatic precipitator 470 and conveyed in batch into large particle size (coarse ash) B5 and small particle size (fine ash) B6, and only fine ash B6 sorted by the sorter 481 is captured by a fine particle capturing apparatus 482, and fed into the heating means 411.

Meanwhile, in this case, the dust B1 to B4 are conveyed in batch by air N and led into the sorter 481. The sorter 481 may be constituted by, for example, a cyclone, and it is convenient when it is designed to adjust the degree of sorting. As the fine particle capturing apparatus 482, in this case, a bag filter is used.

In this case, only the fine ash B6 is gasified and fed into the desulfurization apparatus 420 to be made, and therefore, same as in embodiment 1, the required amount of treating agent A and required capacity of heating means 411 can be reduced, so that the Se may be made harmless more easily and inexpensively.

In this combustion exhaust gas treatment apparatus, only by adding the heating means and sorter to the conventional combustion exhaust gas treatment apparatus (capable of conveying the dust from the electrostatic precipitator in batch), the combustion exhaust gas treatment apparatus can be realized without modifying the conveyor for conveying the dust from the electrostatic precipitator and other structures, and the Se in the combustion exhaust gas is made harmless, and modification of the existing combustion exhaust gas treatment apparatus is easy, and when newly installing this apparatus, the conventional design or equipment may be used as it is.

The result of dust heating experiment, dust capturing test, and elution experiment by the same apparatus as in the embodiment is described below.

In the experiment, coal containing 3 mg/kg of Se was supplied into a combustion furnace at a rate of 25 kg/h, and the combustion exhaust gas exhausted from the combustion furnace at a rate of 200 $m^3$ N/h was cooled to 150°C and fed into the electrostatic precipitator. In this case, more than 99 % of the dust was captured by the electrostatic precipitator, and the amount of dust collected by the conveyor (the total collected from the hoppers) was 3.4 kg/h. The capturing amount of coarse ash B5 and fine ash B6, mean particle size, and eluting Se concentration are shown in Table 2.

**Table 2**

| Item | Collected ash | |
| --- | --- | --- |
| | Coarse ash B5 | Fine ash B6 |
| Capturing amount (kg/h) | 2.05 | 1.30 |
| Mean particle size of captured ash (µm) | 13 | 5.4 |
| Eluting selenium concentration in captured ash (mg/liter) | 0.26 | 0.36 |

That is, in the fine ash B6, the mean particle size was 5.4 um, and the capturing amount was small, 1.30 kg/h, but the eluting Se concentration exceeded the standard, 0.36 mg/liter. In coarse ash B5, the mean particle size was 13 um, the capturing amount was large, 2.0 kg/h, but the eluting Se concentration was below the standard, 0.26 mg/liter. Accordingly, it is known that the coarse ash B5 can be directly discarded. Hence, Se insoluble treatment is not needed in the coarse ash B5 which is very large in output, and it is evident that the required amount of treating agent A and required capacity of heating means 411 can be saved substantially.

The invention may be also realized in many other forms aside from the foregoing embodiments. For example, if hexavalent Se does not exist and only other Se than hexavalent is present in the combustion exhaust gas in the desulfurization apparatus, the process or apparatus for reducing hexavalent Se into tetravalent Se is not needed. The constitution of the desulfurization apparatus is not limited to the tank oxidation type shown in the embodiments, and, for example, an oxidation column in which the slurry extracted from the absorption column is fed may be separately installed, and by blowing air into this oxidation column, final oxidation-reduction reaction may be performed herein. In this case, too, hexavalent Se is transformed into tetravalent Se in the absorption column or oxidation column.

In the embodiments, as mentioned above, the charging position of the treating agent A may be a position in the wastewater treating apparatus 450. That is, since the slurry liquid in the absorption column or cooling and dust collecting column of the desulfurization apparatus is circulating in the wastewater treating apparatus 450, the entire Se can be made insoluble by charging the treating agent only in the wastewater treating apparatus 450.

As the treating agent for making tetravalent Se insoluble, for example, aside from $FeCl_3$, $Fe_2(SO_4)_3$, chelating agent (e.g. Epolus MX-7 of Miyoshi Resin), or high molecular heavy metal capturing agent (e.g. Epofloc L-1 of Miyoshi Resin) may be used.

EFFECTS OF THE INVENTION

According to the combustion exhaust gas treatment apparatus of the invention (1), most of Se in flue is removed by the dust collector in a state being contained in the dust, and is heated and gasified by the heating means. Accordingly, almost no Se is left over in the dust after treatment, which can be directly recycled or discarded, and the Se elution standard is easily satisfied.

According to the combustion exhaust gas treatment apparatus of the invention (2), the Se removed together with the dust from the combustion exhaust gas is heated and gasified, and introduced into the desulfurization apparatus, and eventually all of hexavalent Se can be treated as tetravalent Se, and only by insoluble treatment by treating agent, the Se elution standard is easily satisfied, and moreover the absorption column of the desulfurization apparatus also functions as the Se reducing reaction facility, and hence the constitution of the entire apparatus is simple as compared with the constitution for providing the reaction column for reducing Se separately. Still more, owing to the constitution designed for separating Se from the dust by heating means and feeding into the desulfurization apparatus, so that the entire dust may not fed into the desulfurization apparatus, recycling of dust is easy, and lowering of desulfurization performance in the desulfurization apparatus can be avoided.

According to the combustion exhaust gas treatment apparatus of the invention (3), the oxidation-reduction reaction control means controls the oxidation-reduction reaction of the slurry in the desulfurization apparatus, so that the hexavalent Se mixed in the slurry in the desulfurization apparatus may be almost entirely reduced by the sulfurous acid in the slurry to be tetravalent. Hence, the hexavalent Se can be almost completely transformed into tetravalent form in the desulfurization apparatus, and Se insoluble treatment in the combustion exhaust gas is done more easily and perfectly.

According to the combustion exhaust gas treatment apparatus of the invention (4), the Se elution standard can be satisfied easily, and the desulfurization apparatus functions also as hexavalent Se reducing reaction facility, and therefore the constitution of the entire apparatus is simplified as compared with the constitution for comprising reaction column for reducing Se separately. In this case, the gasified Se and combustion exhaust gas are fed and treated in the cooling and dust collecting column in the desulfurization apparatus, and not only dust but also impurities such as Se may not be mixed passively into the slurry in the absorption column of the desulfurization apparatus, and therefore the desulfurization rate in the desulfurization apparatus is maintained high, and gypsum of high quality can be obtained.

According to the combustion exhaust gas treatment apparatus of the invention (5), only the dust separated and collected from the specific recovery unit at the outlet side of the combustion exhaust gas in the dust collecting means is heated, and only the gasified Se is fed into the desulfurization apparatus to be made insoluble, and therefore the required amount of treating agent and required capacity of heating means may be reduced, so that the Se may be made harmless more easily and economically.

According to the combustion exhaust gas treatment apparatus of the invention (6), the heating temperature of the dust by the heating means is 100 to 1200°C, and hence the gasified Se will not be condensed again in the dust, so that the Se can be removed efficiently from the dust, and therefore the Se elution standard of dust can be satisfied easily.

**Claims**

1. Combustion exhaust gas treatment apparatus for treating combustion exhaust gas containing dust, sulfurous acid and Se components, including a dust collector (470) for removing dust from the combustion exhaust gas and a desulfurization apparatus (420, 460) for treating sulfurous acid contained in the combustion exhaust gas having an absorption column (421) in which an absorbent slurry for absorbing and removing sulfurous acid circulates, **characterized by**
heating means (411) for heating the dust removed by the dust collector (470) up to a temperature for gasification of Se in the dust, the gas generated by heating the dust by the heating means (411) being fed into the desulfurization apparatus (420, 460) together with the combustion exhaust gas, and Se is dissolved and captured in the slurry in the desulfurization apparatus, and feeding means (414) for mixing a treating agent for making the tetravalent Se insoluble into the circulating absorbent slurry.

2. Combustion exhaust gas treatment apparatus of claim 1, further comprising oxidation-reduction reaction control means (440) for controlling the oxidation-reduction reaction in the desulfurization apparatus (420, 460), so that the hexavalent Se in the slurry in the desulfurization apparatus may be reduced to tetravalent Se by sulfurous acid in the slurry.

3. Combustion exhaust gas treatment apparatus of claim 1 or 2, wherein the desulfurization apparatus (460) further having a cooling and dust collecting column (461) disposed upstream of the absorption column (421), wherein the gas generated by heating the dust by the heating means (411) is fed into the desulfurization apparatus (460) together with the combustion exhaust gas, and Se is dissolved and captured in the circulation liquid in the cooling and dust collecting column (461), and the treating agent for making the tetravalent Se insoluble is mixed in the treating process into the circulation liquid.

4. Combustion exhaust gas treatment apparatus of any one of claims 1 to 3, wherein the dust collecting means (470) comprises a plurality of recovery units (471-474) for separating and collecting dust from the inlet side to the outlet side of the combustion exhaust gas, and only the dust separated and collected from the recovery unit at the outlet side is fed into the heating means (411).

5. Combustion exhaust gas treatment apparatus of any one of claims 1 to 3, further comprising sorting means (470) for sorting the dust separated by the dust collecting means (470) into a large particle size group (fraction) (B1, B2) and a small particle size group (fraction) (B3, B4), wherein only the small particle size dust group (fraction) is introduced into the heating means (411).

6. Combustion exhaust gas treatment apparatus of any one of claims 1 to 5, wherein the heating means (411) heats the dust up to a temperature in the range of 100 to 1200°C, especially 320 to 1000°C.

**Patentansprüche**

1. Abgasbehandlungsvorrichtung zur Behandlung eines Verbrennungsabgases, das Staub, schweflige Säure und Selenbestandteile enthält, umfassend eine Staubabscheideeinrichtung (470) zur Abscheidung von Staub aus dem Verbrennungsabgas und eine Entschwefelungseinrichtung (420, 460) zur Behandlung von in dem Verbrennungsabgas enthaltener schwefliger Säure, die eine Absorptionssäule (421), in der eine Absorptionsaufschlämmung zur Absorption und Abscheidung von schwefeliger Säure zirkuliert, aufweist,
**gekennzeichnet durch**
eine Erhitzungseinrichtung (411) zum Erhitzen des von der Staubabscheideeinrichtung (470) abgeschiedenen Staubs auf eine zum Vergasen von im abgeschiedenen Staub enthaltenen Selens ausreichende Temperatur, wobei das beim Erhitzen des Staubs **durch** die Erhitzungseinrichtung (411) erzeugte Gas zusammen mit dem Verbrennungsabgas in die Entschwefelungseinrichtung (420, 460) eingespeist wird und das Selen in der Aufschlämmung der Entschwefelungseinrichtung gelöst und aufgenommen wird, und eine Einspeiseeinrichtung (414) zum Einmischen eines Behandlungsmittels, mit dem tetravalentes Selen unlöslich gemacht wird, in die zirkulierende Absorptionsaufschlämmung.

2. Abgasbehandlungsvorrichtung nach Anspruch 1, die ferner eine Einrichtung (440) zur Regelung der Oxidations - Reduktions - Reaktion für die Regelung der Oxidations - Reduktions - Reaktion in der Entschwefelungseinrichtung (420, 460) aufweist, so dass hexavalentes Selen in der Aufschlämmung der Entschwefelungseinrichtung von der schwefligen Säure in der Aufschlämmung zu tetravalentem Selen reduziert werden kann.

3. Abgasbehandlungsvorrichtung nach Anspruch 1 oder 2, bei der die Entschwefelungseinrichtung (460) ferner eine der Absorptionssäule (421) vorgeschaltete Kühl- und Staubabscheidesäule (461) aufweist, in der das von der Erhitzungseinrichtung (411) durch Erhitzen des Staubs erzeugte Gas in die Entschwefelungseinrichtung (460) zusammen mit dem Verbrennungsabgas eingespeist wird, und Selen in der in der Kühl- und Staubabscheidesäule (461) zirkulierenden Flüssigkeit gelöst und abgeschieden wird, und das Behandlungsmittel, mit dem tetravalentes Selen unlöslich gemacht wird, während des Behandlungsvorgangs in die zirkulierende Flüssigkeit eingemischt wird.

4. Abgasbehandlungsvorrichtung nach einem der Ansprüche 1 bis 3, bei der die Staubabscheideeinrichtung (470) von der Einlassseite zur Auslassseite für das Verbrennungsabgas hin eine Vielzahl von Abscheideeinheiten (471 - 474) zum Abscheiden und Auffangen des Staubs aufweist und bei der der Staub, der in der Abscheideeinheit an der Auslassseite abgeschieden und aufgefangen wird, in die Erhitzungseinrichtung (411) eingespeist wird.

5. Abgasbehandlungsvorrichtung nach einem der Ansprüche 1 bis 3, die ferner eine Klassiereinrichtung (470) zur Klassierung des von der Staubabscheideeinrichtung (470) abgeschiedenen Staubs in eine Gruppe (Fraktion) grober Teilchen (B1, B2) und eine Gruppe (Fraktion) feiner Teilchen (B3, B4) aufweist, und bei der nur die Staubgruppe (Fraktion) feiner Teilchen in die Erhitzungseinrichtung (411) eingespeist wird.

6. Abgasbehandlungsvorrichtung nach einem der Ansprüche 1 bis 5, bei der die Erhitzungseinrichtung (411) den Staub auf eine Temperatur im Bereich von 100 bis 1200 °C, insbesondere 320 bis 1000 °C erhitzt.

**Revendications**

1. Dispositif de traitement de gaz de la combustion pour traiter des gaz de la combustion contenant de la poussière, de l'acide sulfureux et des composants à base de Se, comprenant un appareil de dépoussiérage (470) pour séparer la poussière des gaz de la combustion, un appareil de désulfuration (420, 460) pour traiter l'acide sulfureux contenu dans le gaz de la combustion dans une colonne d'absorption (421) dans laquelle circule une suspension absorbante pour absorber et séparer l'acide sulfureux,
**caractérisé par**

un appareil de réchauffage (411) pour réchauffer la poussière séparée dans l'appareil de dépoussiérage (470) à une température suffisamment élevée pour gazéifier le Se dans la poussière, le gaz généré par le réchauffage de la poussière par l'appareil de réchauffage (411) est introduit dans l'appareil de désulfuration (420, 460) ensemble avec le gaz de la combustion et le Se est dissous et capté dans la suspension, et par un moyen d'alimentation (414) pour ajouter à la circulante suspension absorbante un agent de traitement pour rendre le Se tetravalent insoluble.

2. Dispositif de traitement de gaz de la combustion selon la revendication 1, comprenant de plus un dispositif de réglage de la réaction de l'oxydation - réduction pour régler la réaction de l'oxydation - réduction dans l'appareil de désulfuration (420, 460) de telle façon que le Se hexavalent dans la suspension de l'appareil de désulfuration peut être réduit au Se tetravalent par l'acide sulfureux dans la suspension.

3. Dispositif de traitement de gaz de la combustion selon la revendication 1, dans lequel l'appareil de désulfuration (460) comprenant de plus une colonne à refroidir et à collecter la poussière (461) disposée avant la colonne d'absorption (421), dans laquelle le gaz généré par le réchauffage de la poussière par l'appareil de réchauffage est introduit dans l'appareil de désulfuration (460) ensemble avec le gaz de la combustion, et le Se est dissous et capté par le liquide circulant de la colonne à refroidir et à collecter la poussière (461), et l'agent de traitement pour rendre le Se tetravalent insoluble est ajouté pendant le processus de traitement au liquide circulant.

4. Dispositif de traitement de gaz de la combustion selon l'une quelconque des revendications 1 à 3, dans lequel l'appareil de dépoussiérage (470) comprenant une pluralité d'unités de récupération (471 - 474) pour séparer et collecter la poussière disposées du côté de l'entrée jusqu'au côté de la sortie, et seule la poussière séparée et collectée de l'unité de récupération au côté de la sortie est introduite dans l'appareil de réchauffage.

5. Dispositif de traitement de gaz de la combustion selon la revendication 2, comprenant de plus un dispositif de classement (470) pour classer la poussière séparée par l'appareil de dépoussiérage (470) dans un groupe (une fraction) des particules groses (B1, B2) et un groupe (une fraction) des particules fines (B3, B4), et seules les particules fines sont introduites dans l'appareil de réchauffage.

6. Dispositif de traitement de gaz de la combustion selon la revendication 5, dans lequel l'appareil de réchauffage réchauffe la poussière à une température entre 100 et 1200 °C, de préférence entre 320 et 1000 °C.

# Fig. 1

EP 1 142 624 B1

# Fig. 2

EP 1 142 624 B1

# Fig. 3

EP 1 142 624 B1

# Fig. 4

## Fig. 5

Fig. 6

EP 1 142 624 B1

Fig. 7

Fig. 8